# EUROPÄISCHE PATENTSCHRIFT

(11) **EP 0 932 783 B1**
(45) Veröffentlichungstag und Bekanntmachung des Hinweises auf die Patenterteilung: **20.11.2002**
(21) Anmeldenummer: 97943900.7
(22) Anmeldetag: 24.09.1997
(51) Int. Cl.: F16K 17/04, F15B 13/01

(54) **KOMBINIERTES DRUCKMINDER- UND SCHALTVENTIL**
REDUCTION AND CONTROL VALVE
SOUPAPE DE REDUCTION ET DE COMMANDE

(30) Priorität: 15.10.1996 DE 19642567
(43) Veröffentlichungstag der Anmeldung: 04.08.1999
(73) Patentinhaber: BRUENINGHAUS HYDROMATIK GMBH, 89275 Elchingen (DE)
(72) Erfinder: HÖRMANN, Werner, D-89257 Illertissen (DE)
(74) Vertreter: Körfer, Thomas, Dipl.-Phys.
(86) Internationale Anmeldenummer: EP9705254
(87) Internationale Veröffentlichungsnummer: WO98016768

(56) Entgegenhaltungen:
- DE-A- 3 431 103
- DE-A- 4 215 724
- DE-A- 19 510 586
- US-A- 4 237 933

## Beschreibung

Die Erfindung betrifft ein hydraulisches Druckminderventil mit einem vorgeschalteten Schaltventil.

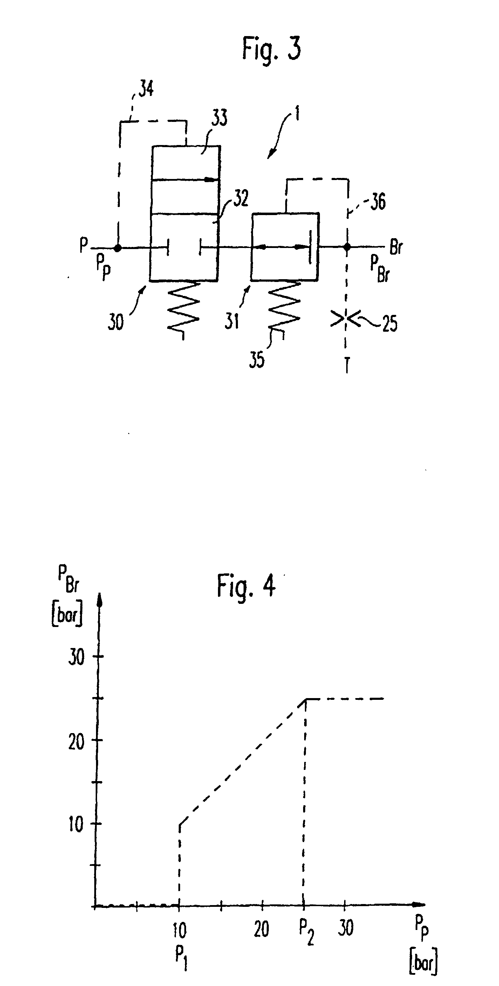

Druckminderventile und Schaltventile sind als Einzelkomponenten bereits in vielfältiger Ausbildung bekannt. Zur hydraulischen Ansteuerung bestimmter Aggregate, z.B. einer Haltebremse, ist es notwendig, dem Druckminderventil ein Schaltventil vorzuschalten, um eine bestimmte, beispielsweise aus Fig. 4 ersichtliche Ansteuerkennlinie zu erreichen. Neben einem Niedrigdruckbereich, in welchem das Ventil nicht ansprechen soll, soll ein proportionaler Regelbereich sowie ein Druckbegrenzungsbereich, in welchem der Steuerdruck auf einen Maximaldruck begrenzt wird, geschaffen werden. Bislang war es üblich, diese Regelcharakteristik dadurch zu erzeugen, daß mehrere Einzelventile, insbesondere ein Schaltventil und ein Druckminderventil, als Einzelbauteile zusammengeschaltet werden. Diese aus mehreren Einzelventilen bestehende Lösung ist jedoch aufwendig und erfordert aufgrund der zumindest zwei vorzusehenden Einzelventile einen relativ großen Einbauraum. Insbesondere wenn zusätzlich eine Ablaufdrossel vorzusehen ist, ergibt sich ein relativ komplexer Aufbau.

Der Erfindung liegt daher die Aufgabe zugrunde, die Funktionen eines Schaltventils und eines Druckminderventils in einem einzigen kombinierten Hydraulikventil zu vereinen.

Die Aufgabe wird durch die Merkmale des Anspruchs 1 gelöst.

Der Erfindung liegt der Lösungsansatz zugrunde, einen Stellkolben proportional zu einem Eingangsdruck zu verschieben und dem Stellkolben jeweils im Bereich zwischen der Grundstellung und einer Mindestverschiebung, im Bereich zwischen der Mindestverschiebung und der Maximalverschiebung und bei Erreichen der Maximalverschiebung unterschiedliche Steuerfunktionen zuzuordnen.

Die Ansprüche 2 bis 14 beinhalten vorteilhafte Weiterbildungen der Erfindung.

Entsprechend Anspruch 2 kann an dem erfindungsgemäßen Hydraulikventil ein dritter Druckmittelanschluß vorgesehen sein, der mit dem zweiten Druckmittelanschluß über eine Drossel verbunden ist. Auf diese Weise kann zusätzlich eine Ablaufdrossel in das erfindungsgemäße Hydraulikventil integriert werden, so daß sich die Anzahl der Funktionen des erfindungsgemäßen Hydraulikventils sowie der Integrationsgrad weiter erhöhen. Entsprechend Anspruch 3 kann die Drossel in einfacher Weise als Abflachung, Kerbe oder Bohrung an dem Stellkolben ausgebildet sein, was fertigungstechnisch besonders einfach realisierbar ist.

Die dem Eingangsdruck proportionale Rückstellkraft kann z.B. entsprechend Anspruch 5 durch eine, an dem der Druckfläche gegenüberliegenden Ende ausgebildete Rückstellfeder ausgeübt werden, die in dem Ventilgehäuse ebenfalls ohne weiteres integrierbar ist. Vorteilhafterweise kann die von der Rückstellfeder ausgeübte Rückstellkraft nach Anspruch 6 durch Verändern der Position eines Federtellers verstellbar sein, so daß die Kennlinie des erfindungsgemäßen Hydraulikventils von außerhalb des Ventilkörpers einstellbar ist.

An dem Steuerkolben kann entsprechend Anspruch 7 eine erste Ringnut ausgebildet sein, dessen eine Seitenkante entsprechend Anspruch 8 vorteilhafterweise die zweite Steuerkante bildet. Der an der ersten Ringnut ausgebildeten Steuerkante kommt dabei die Druckminderungs- bzw. Druckbegrenzungsfunktion zu. Entsprechend kann an dem Stellkolben nach Anspruch 10 eine zweite Ringnut ausgebildet sein, dessen eine Seitenkante vorteilhafterweise entsprechend Anspruch 11 die erste Steuerkante bildet. Dabei kommt der zweiten Ringnut beim Erreichen der dem ersten Schwellwert des Eingangsdrucks entsprechenden Minimalverschiebung des Stellkolbens die Schaltfunktion und im Bereich zwischen der Minimalverschiebung und der Maximalverschiebung des Stellkolbens die dem Eingangsdruck proportionale Druckregelfunktion zu. Die erste Ringnut, die zweite Ringnut und eine an die Druckfläche des Stellkolbens angrenzende Druckkammer des Ventilkörpers können über eine oder mehrere in dem Stellkolben vorgesehene Bohrungen nach Anspruch 12 miteinander verbunden sein.

Der Stellkolben kann ferner entsprechend Anspruch 13 eine dritte Ringnut aufweisen, um das Druckmittel in die Drossel einzuleiten.

Ferner kann entsprechend Anspruch 14 eine Einrichtung zum lösbaren Stillsetzen des Stellkolbens vorgesehen sein.

Die Erfindung wird nachfolgend anhand bevorzugter Ausführungsbeispiele unter Bezugnahme auf die Zeichnung näher beschrieben. In der Zeichnung zeigen:
- Fig. 1: einen Längsschnitt durch ein erstes Ausführungsbeispiel des erfindungsgemäßen Hydraulikventils in der Grundstellung des Stellkolbens,
- Fig. 2: einen Längsschnitt durch das Ausführungsbeispiel entsprechend Fig. 1 mit einer aus der Grundstellung verschobenen Position des Stellkolbens,
- Fig. 3: ein hydraulisches Ersatzschaltbild des erfindungsgemäßen Hydraulikventils,
- Fig. 4: eine Kennlinie des erfindungsgemäßen Hydraulikventils,
- Fig. 5: einen Längsschnitt durch ein zweites Ausführungsbeispiel des erfindungsgemäßen Hydraulikventils mit stillgesetztem Stellkolben,
- Fig. 6: einen Längsschnitt durch das Ausführungsbeispiel entsprechend Fig. 5 mit gelöstem Stellkolben,
- Fig. 7: einen Längsschnitt durch ein drittes Ausführungsbeispiel des erfindungsgemäßen Hydraulikventils mit verstellbarer Rückstellfeder und
- Fig. 8: einen Längsschnitt durch ein viertes Ausführungsbeispiel der Erfindung.

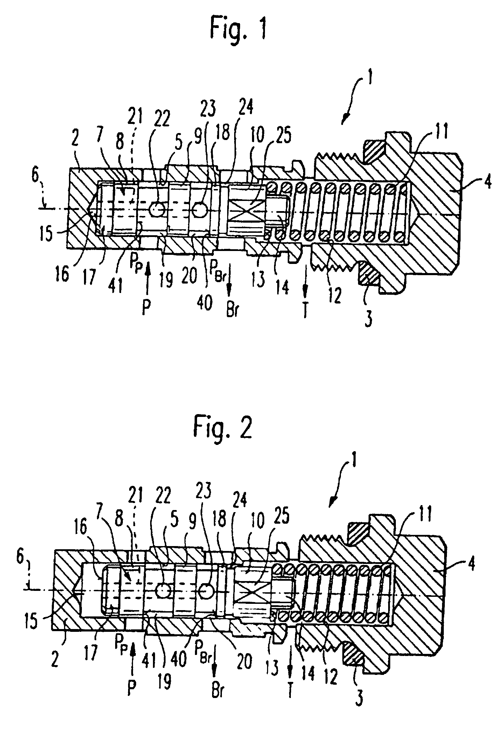

Fig. 1 zeigt einen Längsschnitt durch den Ventilkörper 2 des erfindungsgemäßen, kombinierten Hydraulikventils 1. Der Ventilkörper 2 ist in eine nicht dargestellte Ventilaufnahme einsetzbar und gegen diese mittels eines Dichtrings 3 abdichtbar. Dabei ist das in der Zeichnung rechte Ende 4 des Ventilkörpers 2 von außen zugänglich.

In dem Ventilkörper 2 sind ein erster Druckmittelanschluß P, welcher z.B. von einer Druckleitung kommt, ein zweiter Druckmittelanschluß Br, der zu dem anzusteuernden hydraulischen Aggregat, z.B. einer Haltebremse, führt und ein dritter Druckmittelanschluß T, welcher mit dem Druckmitteltank verbunden ist, ausgebildet. Die Strömungsrichtung des zwischen den Druckmittelanschlüssen P, Br, T fließenden Druckmittels ist durch entsprechende Pfeile kenntlich gemacht. Der an dem ersten Druckmittelanschluß P herrschende Eingangsdruck wird nachfolgend mit pₚ und der an dem zweiten Druckmittelanschluß Br herrschende Ausgangsdruck oder Steuerdruck wird nachfolgend mit p_{Br} bezeichnet.

Der Ventilkörper 2 weist eine axiale Längsbohrung 5 auf, die sich parallel und konzentrisch zu der Längsachse 6 des Ventilkörpers 2 erstreckt. In der Längsbohrung 5 des Ventilkörpers 2 ist ein Stellkolben 7 axial beweglich angeordnet und wird von Führungsabschnitten 8, 9, 10 und 18 in der axialen Längsbohrung 5 des Ventilkörpers 2 geführt. Der Stellkolben 7 wird ohne Beaufschlagung mit dem Eingangsdruck pₚ durch die Rückstellfeder 11 in die in Fig. 1 dargestellte Grundstellung gedrückt. Zur Aufnahme der Rückstellfeder 11 weist der Ventilkörper 2 eine sich an die axiale Längsbohrung 5 axial anschließende Federkammer 12 auf. Die als Druckfeder ausgebildete Rückstellfeder 11 stützt sich dabei an einem Ende der Federkammer 12 an dem Ventilkörper 2 ab und wirkt auf ein erstes Ende 13 des Stellkolbens 7 ein. An dem ersten Ende 13 des Stellkolbens 7 ist im Ausführungsbeispiel ein Zylinderstumpf 14 mit verringertem Durchmesser an dem Stellkolben 7 angeformt, um die Rückstellfeder 11 zu arretieren.

Zur Verschiebung des Stellkolbens 7 gegen die von der Rückstellfeder 11 ausgeübte Rückstellkraft ist in dem Ventilkörper 2 eine Druckkammer 15 ausgebildet, an welche eine als Druckfläche 16 dienende Stirnfläche an dem der Rückstellfeder 11 gegenüberliegenden Ende 17 des Stellkolbens 7 angrenzt. An dem Stellkolben 7 sind eine erste Ringnut 19 und eine zweite Ringnut 20 ausgebildet, die durch den Führungsabschnitt 9 voneinander getrennt sind. Zur Verbindung der ersten Ringnut 19 mit der zweiten Ringnut 20 einerseits sowie zur Verbindung der ersten Ringnut 19 mit der Druckkammer 15 andererseits weist der Stellkolben 7 eine axiale Bohrung 21 auf, die als in die Druckkammer 15 ausmündende Sackbohrung ausgebildet ist. Die axiale Bohrung 21 ist über radiale Querbohrungen 22 und 23 mit der ersten Ringnut 19 und mit der zweiten Ringnut 20 verbunden.

In dem Stellkolben 7 ist ferner eine dritte Ringnut 24 ausgebildet, welche sich innerhalb des gesamten Verschiebungsbereichs des Stellkolbens 7 im Bereich des zweiten Druckmittelanschlusses Br befindet. Die dritte Ringnut 24 dient entsprechend einer erfindungsgemäßen Weiterbildung dazu, eine zwischen der dritten Ringnut 24 und dem Federraum 12 ausgebildete Drossel 25 mit dem zweiten Druckmittelanschluß Br zu verbinden. Da der Federraum 12 über den dritten Druckmittelanschluß T mit dem Druckmitteltank verbunden ist, ergibt sich insgesamt eine gedrosselte Verbindung zwischen dem zweiten Druckmittelanschluß Br und dem nicht dargestellten Druckmitteltank. Diese Verbindung dient dazu, das von dem an dem zweiten Druckmittelanschluß Br angeschlossenen hydraulischen Aggregat zurückfließende Druckmittel gedrosselt dem Druckmitteltank zuzuführen. Diese im Rahmen des Grundkonzepts der vorliegenden Erfindung nicht notwendige Weiterbildung erhöht die Anzahl der von dem erfindungsgemäßen, kombinierten Hydraulikventil 1 zur Verfügung gestellten Funktionen, so daß der Integrationsgrad des Ventils weiter erhöht wird. Die Drossel 25 kann in besonders einfacher Weise als Abflachung an dem äußeren Umfang des ansonsten zylinderförmig ausgebildeten Führungsabschnitts 10 ausgebildet sein, was fertigungstechnisch besonders einfach realisierbar ist.

Die erste Ringnut 19 befindet sich in der in Fig. 1 dargestellten Grundstellung im Bereich des ersten Druckmittelanschlusses P, während sich die zweite Ringnut 20 in dieser Grundstellung im Bereich zwischen dem ersten Druckmittelanschluß P und dem zweiten Druckmittelanschluß Pr befindet.

Zum besseren Verständnis der Arbeitsweise des erfindungsgemäßen kombinierten Hydraulikventils 1 wird nachfolgend eine Kennlinie des erfindungsgemäßen Hydraulikventils 1 unter Bezugnahme auf Fig. 4 beschrieben.

In Fig. 4 ist der Ausgangsdruck p_{Br} an dem zweiten Druckmittelanschluß Br als Funktion des an dem ersten Druckmittelanschluß P herrschenden Eingangsdrucks pₚ in unterbrochener Linienführung dargestellt. Die in Fig. 4 angegebenen Druckbereiche sind lediglich beispielhaft zu verstehen. Im Rahmen der Erfindung ist auch eine zahlenmäßig andere Auslegung des erfindungsgemäßen kombinierten Hydraulikventils 1 ohne weiteres möglich.

Solange der Eingangsdruck pₚ geringer als ein unterer Schwellwert p₁ (im dargestellten Ausführungsbeispiel 10 bar) ist, ist der Ausgangsdruck p_{Br} an dem zweiten Druckmittelanschluß Br gleich Null. Das in dem erfindungsgemäßen kombinierten Hydraulikventil 1 integrierte Schaltventil ist in diesem Bereich geschlossen. Sobald der an dem ersten Druckmittelanschluß P herrschende Eingangsdruck pₚ den unteren Schwellwert p₁ überschreitet, öffnet das Schaltventil. In dem Bereich oberhalb des unteren Schwellwerts p₁, aber unterhalb eines oberen Schwellwerts p₂ ist der Ausgangsdruck P_{Br} proportional zu dem Eingangsdruck pₚ. Überschreitet der an dem ersten Druckmittelanschluß P herrschende Eingangsdruck pₚ den oberen Schwellwert p₂ (im Ausführungsbeispiel 25 bar), so arbeitet das erfindungsgemäße kombinierte Hydraulikventil 1 als Druckminder- oder Druckbegrenzungsventil. In dem Bereich oberhalb des oberen Schwellwerts p₂ ist der Ausgangsdruck p_{Br} daher unabhängig von dem Eingangsdruck pₚ weitgehend konstant (im dargestellten Ausführungsbeispiel 25 bar). Das erfindungsgemäße Hydraulikventil 1 umfaßt daher sowohl eine Schaltfunktion als auch eine Druckbegrenzungsfunktion.

Das dem erfindungsgemäßen Hydraulikventil 1 entsprechende hydraulische Ersatzschaltbild ist in Fig. 3 dargestellt. Ein Schaltventil 30 ist zwischen einer geschlossenen Schaltstellung 32 mit unterbrochenem Durchfluß und einer geöffneten Schaltstellung 33 mit geöffnetem Durchfluß hin- und herschaltbar. Wenn der Eingangsdruck pₚ an dem ersten Druckmittelanschluß P geringer als der untere Schwellwert p₁ ist, befindet sich das Schaltventil 30 in seiner geschlossenen Schaltstellung 32. Sobald eine mit dem ersten Druckmittelanschluß P verbundene Steuerleitung 34 mit einem Druck pₚ beaufschlagt ist, der den unteren Schwellwert p₁ überschreitet, schaltet das Schaltventil 30 in seine geöffnete Schaltstellung 33 und gibt den Durchfluß frei. Das Druckminder- oder Druckbegrenzungsventil 31 ist geöffnet, solange der Ausgangsdruck p_{Br} an dem zweiten Druckmittelanschluß Br den oberen Schwellwert p₂ nicht überschreitet. Sobald der Eingangsdruck pₚ den zweiten Schwellwert p₂ überschreitet, regelt das Druckminder- bzw. Druckregelventil 31 den Ausgangsdruck p_{Br} auf einen konstanten Ausgangspegel ein, der über die Rückstellfeder 35 vorgebbar ist. Für diese Druckbegrenzungsfunktion ist die Steuerleitung 36 des Druckminder- bzw. Druckbegrenzungsventils 31 mit dem zweiten Druckmittelanschluß Br verbunden.

Entsprechend einer erfindungsgemäßen Weiterbildung kann in dem erfindungsgemäßen kombinierten Hydraulikventil 1 zusätzlich eine Ablaufdrossel 25 integriert sein, die den zweiten Druckmittelanschluß Br mit einem dritten Druckmittelanschluß T verbindet, welcher mit dem Druckmitteltank in Verbindung steht. Die Ablaufdrossel 25 gewährleistet den Rücklauf des Druckmittels von dem an dem Druckmittelanschluß Br angeschlossenen hydraulisch betätigbaren Aggregat zum Druckmitteltank hin während des Rückstellvorgangs. Durch entsprechende Ausbildung der Ablaufdrossel 25 wird die Betätigungszeit des Aggregats gesteuert.

Nach der Erläuterung der prinzipiellen Arbeitsweise des erfindungsgemäß kombinierten Hydraulikventils 1 soll nachfolgend anhand der Fig. 1 und 2 die Funktionsweise eines ersten Ausführungsbeispiels näher beschrieben werden.

Fig. 1 zeigt das erfindungsgemäße Hydraulikventil 1 in der Grundstellung des Steuerkolbens 7. In dieser Grundstellung befindet sich der Steuerkolben 7 aufgrund der Beaufschlagung mit der Rückstellfeder 11 an seinem in der Fig. 1 linken Anschlag. Die Druckmittelkammer 15 ist über die axiale Längsbohrung 21 und die radiale Querbohrung 22 mit dem ersten Druckmittelanschluß P verbunden und wird somit mit dem Eingangsdruck pₚ beaufschlagt. Der Eingangsdruck pₚ greift somit an der Druckfläche 16 des Stellkolbens 7 an und verschiebt diesen proportional zu dem Eingangsdruck pₚ gegen die Rückstellfeder 11. Dabei wird eine an der zweiten Ringnut 20 ausgebildete erste Steuerkante 40 in den Fig. 1 und 2 nach rechts in Richtung auf die Rückstellfeder 11 verschoben. Wie bereits erwähnt, ist die zweite Ringnut 20 über die axiale Längsbohrung 21 und die radialen Querbohrungen 23 und 22 mit der ersten Ringnut 19 und somit mit dem ersten Druckmittelanschluß P verbunden.

Solange die Verschiebung des Steuerkolbens 7 so gering ist, daß die erste Steuerkante 40 den zweiten Druckmittelanschluß Br noch nicht erreicht, bleibt die Verbindung zwischen dem zweiten Druckmittelanschluß Br und dem ersten Druckmittelanschluß P geschlossen. Sobald jedoch der Eingangsdruck pₚ den unteren Schwellwert p₁ überschreitet, ist die Verschiebung des Stellkolbens 7 so groß, daß die erste Steuerkante 40 in den Bereich des zweiten Druckmittelanschlusses Br vordringt. Nachdem der Eingangsdruck pₚ den unteren Schwellwert p₁ überschritten hat, ist der erste Druckmittelanschluß P daher mit dem zweiten Druckmittelanschluß Br über die erste Steuerkante 40 bzw. die zweite Ringnut 20 verbunden. Bis zum Erreichen des oberen Schwellwerts p₂ ist daher der Ausgangsdruck P_{Br} an dem zweiten Druckmittelanschluß Br dem an dem ersten Druckmittelanschluß P herrschenden Eingangsdruck pₚ proportional.

Beim Erreichen des oberen Schwellwerts p₂ ist der Stellkolben 7 so weit gegen die Rückstellfeder 11 verschoben, daß der Führungsabschnitt 8 den ersten Druckmittelanschluß P vollständig verschließt. Diese Position des Stellkolbens 7 ist in Fig. 2 dargestellt. Die Verbindung zwischen dem ersten Druckmittelanschluß P und dem zweiten Druckmittelanschluß Br wird daher unterbrochen, wenn der Eingangsdruck pₚ den oberen Schwellwert p₂ überschreitet. Sofern der Druck in der Druckkammer 15 durch Abfließen des Druckmittels zu dem zweiten Druckmittelanschluß Br hin unter den oberen Schwellwert p₂ absinkt, wird die Verbindung zwischen dem ersten Druckmittelanschluß P und der Druckkammer 15 aufgrund einer geringfügigen Verschiebung des Stellkolbens 7 nach links in Fig. 2 kurzzeitig wieder hergestellt, bis sich in der Druckkammer 15 ein Druck wieder aufgebaut hat, der dem oberen Schwellwert p₂ entspricht. Die Stellung des Stellkolbens 7 ist im Bereich oberhalb des oberen Schwellwerts p₂ daher weitgehend konstant und der an dem zweiten Druckmittelanschluß Br herrschende Ausgangsdruck p_{Br} wird von dem erfindungsgemäßen, kombinierten Hydraulikventil 1 daher unabhängig von dem Eingangsdruck pₚ weitgehend konstant gehalten. In diesem Bereich arbeitet das erfindungsgemäße Hydraulikventil daher als Druckminder- bzw. Druckbegrenzungsventil.

Eine an der ersten Ringnut 19 ausgebildete zweite Steuerkante 41 ist dabei in Fig. 2 so weit nach rechts verschoben, daß sie mit der rechten Begrenzung des ersten Druckmittelanschlusses P nahezu bündig abschließt. Die Steuerkante 41 bleibt nur so weit geöffnet, um den Bedarf des an der Drossel 25 ablaufenden Druckmittels zu decken.

Das von dem an dem zweiten Druckmittelanschluß Br angeschlossenen hydraulischen Aggregat rückfließende Druckmittel kann über die dritte Ringnut 24, die Drossel 25, den Federraum 12 und den dritten Druckmittelanschluß T zum Druckmitteltank hin abfließen. Dabei zeichnet sich das erfindungsgemäße Hydraulikventil 1 dadurch aus, daß die Drossel 25 in diesem Ventil ebenfalls integriert ist.

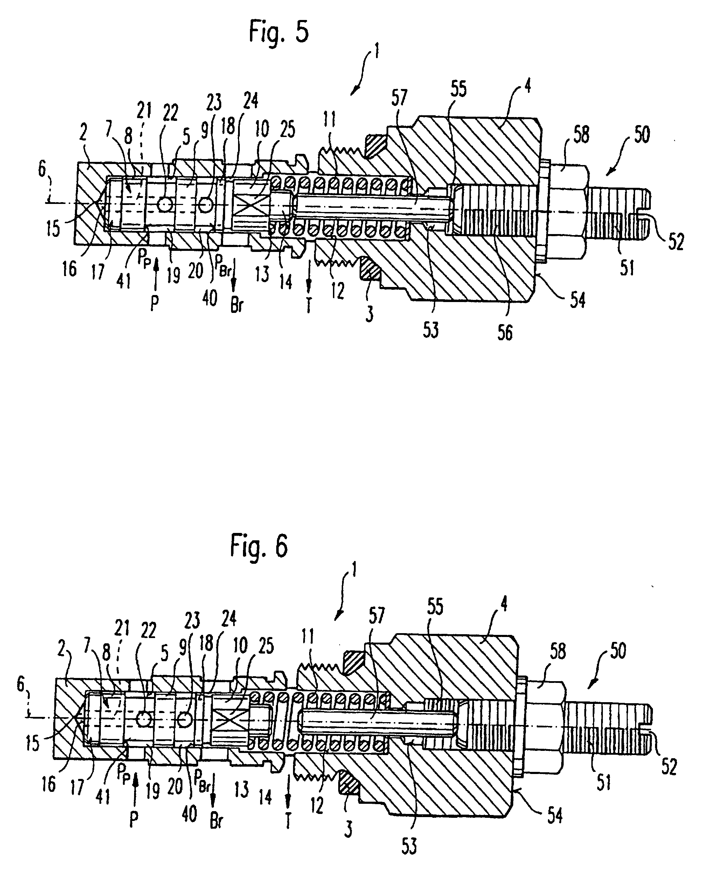

Die Fig. 5 und 6 zeigen einen axialen Längsschnitt durch ein weiteres Ausführungsbeispiel der Erfindung. Der Aufbau des in den Fig. 5 und 6 dargestellten, kombinierten Hydraulikventils 1, das ebenfalls eine Druckminderfunktion und eine Schaltfunktion beinhaltet und in welchem ebenfalls eine Drossel 25 integriert ist, entspricht weitgehend dem anhand der Fig. 1 und 2 bereits beschriebenen Ausführungsbeispiel. Bereits beschriebene Komponenten sind daher mit übereinstimmenden Bezugszeichen bezeichnet, so daß sich eine diesbezügliche Beschreibung erübrigt.

Gegenüber dem Ausführungsbeispiel der Fig. 1 und 2 zusätzlich ist in dem Ventilkörper 2 eine Stillsetzeinrichtung 50 vorgesehen, um den Stellkolben 7 bei Bedarf stillzusetzen. Die Stillsetzeinrichtung 50 umfaßt einen Gewindebolzen 51, der mittels eines geeigneten Werkzeugs, z.B. eines an einer Nut 52 angreifenden Schraubenziehers, in Drehung versetzt werden kann. An den Federraum 12 schließt sich in axialer Richtung an der dem Stellkolben 7 abgelegenen Seite eine Stufenbohrung 53 an, die den Federraum 12 mit einer von außen zugänglichen Stirnseite 54 des Ventilkörpers 2 verbindet. Die Stufenbohrung 53 weist zumindest abschnittsweise ein Innengewinde 55 auf, in welches das Außengewinde 56 des Gewindebolzens 51 eingreift. Zwischen dem Gewindebolzen 51 und dem Stellkolben 7 ist ein Festsetzbolzen 57 eingefügt, der in der Stufenbohrung 53 geführt ist.

Durch Verdrehen des Gewindebolzens 51 kann der Abstand zwischen dem Gewindebolzen 51 und dem Stellkolben 7 so weit verringert werden, daß dieser Abstand mit der Länge des Festsetzbolzens 57 übereinstimmt. Der Stellkolben 7, der Festsetzbolzen 57 und der Gewindebolzen 51 können daher, wie in Fig. 5 gezeigt, miteinander verklemmt werden, so daß der Stellkolben 7 unbeweglich ist und in seiner Grundstellung stillgesetzt ist. Dies kann z.B. bei Einstellarbeiten oder bei Montagearbeiten erforderlich sein.

Durch Verdrehen des Gewindebolzens kann der Abstand zwischen dem Gewindebolzen 51 und dem Stellkolben 7 jedoch ohne weiteres vergrößert werden, so daß der Stellkolben 7 frei beweglich ist und das erfindungsgemäße Hydraulikventil 1 ansprechbar ist und seine vorstehend beschriebene Schaltfunktion und Druckminder- bzw. Druckbegrenzungsfunktion erfüllt ist. Die Stellung des Gewindebolzens 51 kann z.B. durch eine Kontermutter 58 arretiert werden.

Hervorzuheben ist, daß die Stillsetzeinrichtung 50 von außen zugänglich ist und das erfindungsgemäße Hydraulikventil in seiner Funktion daher von außen beeinflußbar ist.

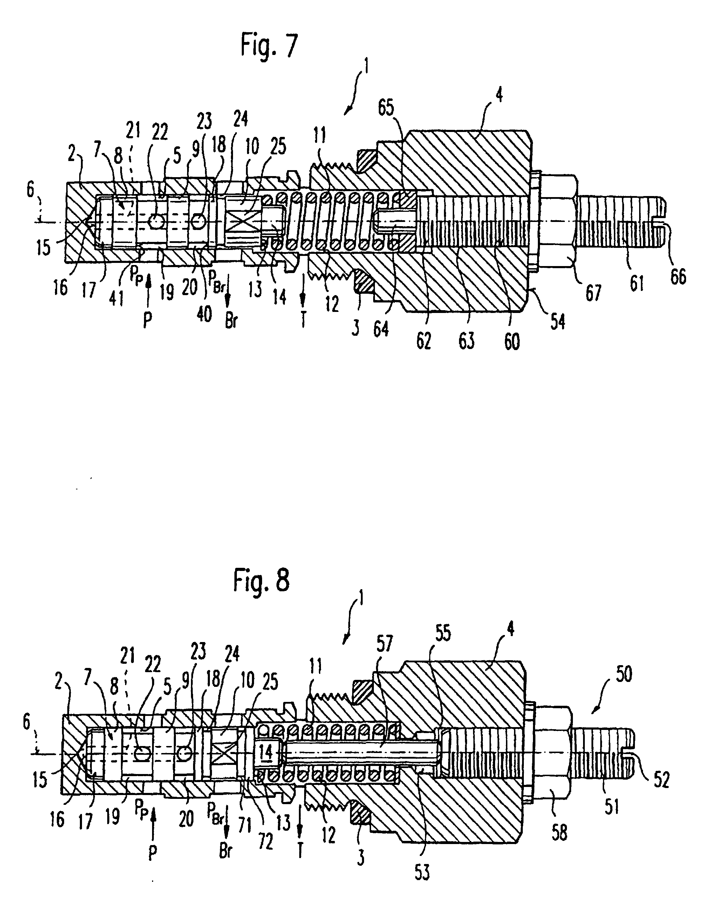

Fig. 7 zeigt ein weiteres Ausführungsbeispiel des erfindungsgemäßen Hydraulikventils 1. Dieses Ausführungsbeispiel ist im wesentlichen baugleich mit dem bereits anhand den Fig. 1 und 2 beschriebenen Ausführungsbeispiel. Bereits beschriebene Elemente sind daher mit übereinstimmenden Bezugszeichen versehen, so daß sich eine diesbezügliche Beschreibung erübrigt.

Bei dem in Fig. 7 in einem axialen Längsschnitt dargestellten Ausführungsbeispiel schließt sich an die Federkammer 12 eine die Federkammer 12 mit der von außen zugänglichen Stirnfläche 54 des Ventilkörpers 2 verbindende Gewindebohrung 60 an. In die Gewindebohrung 60 ist ein Gewindebolzen 61 so einsetzbar, daß dessen Außengewinde 62 mit dem Innengewinde 63 der Gewindebohrung 60 in Eingriff steht. Der Gewindebolzen 61 weist an seinem in den Ventilkörper 2 hineinragenden Ende einen Halteabschnitt 64 auf, der zur Befestigung eines Federtellers 65 dient, an welchem sich die Rückstellfeder 11 abstützt. Durch Verdrehen des Ventilbolzens 61 mit einem geeigneten Werkzeug, z.B. einem an der Nut 66 angreifenden Schraubenzieher, kann die axiale Position des Federtellers 65 und somit die Vorspannung der Rückstellfeder 11 variiert werden. Auf diese Weise kann die Kennlinie des erfindungsgemäßen, kombinierten Hydraulikventils 1 verändert werden, da die von der Rückstellfeder 11 ausgeübte Rückstellkraft wesentlichen Einfluß auf den unteren Schwellwert p₁ und den oberen Schwellwert p₂ hat. Die Position des Gewindebolzens 61 kann z.B. mittels einer Kontermutter 67 arretiert werden.

Auch bezüglich dieses Ausführungsbeispiels ist hervorzuheben, daß die Vorspannung der Rückstellfeder 11 über den Gewindebolzen 61 von außen variierbar ist, ohne daß das erfindungsgemäße Hydraulikventil 1 aus seiner Ventilaufnahme ausgebaut werden muß. Dies erleichtert die Justage des erfindungsgemäßen, kombinierten Hydraulikventils 1 sowie die Nachstellung der Ventilparameter im Wartungsfall.

Fig. 8 zeigt ein viertes Ausführungsbeispiel des erfindungsgemäßen, kombinierten Hydraulikventils 1. Dieses Ausführungsbeispiel umfaßt, wie auch das anhand der Fig. 5 und 6 beschriebene Ausführungsbeispiel, eine Stillsetzeinrichtung 50, um den Stellkolben 7 bei Bedarf stillzusetzen. In Abänderung zu dem in den Fig. 5 und 6 dargestellten Ausführungsbeispiel ist eine vierte Ringnut 71 vorgesehen, die mittels eines an dem Kolben 7 ausgebildeten Stegs 72 von dem dritten Druckmittelanschluß T getrennt ist. Die dritte Ringnut 24 ist ferner so plaziert, daß sie in der in Fig. 8 dargestellten Grundstellung nicht mit dem zweiten Druckmittelanschluß Br in Verbindung steht.

Die Funktion des kombinierten Hydraulikventils 1 ist im wesentlichen die gleiche wie die der vorstehend beschriebenen Ausführungsbeispiele. Sobald der Stellkolben 7 so weit gegen die Rückstellfeder 11 verschoben ist, daß die Ringnut 71 mit der Federkammer 12 und somit mit dem dritten Druckmittelanschluß T verbunden ist und zugleich die dritte Ringnut 24 bis in den Bereich des zweiten Druckmittelanschlusses Br verschoben ist, ist insgesamt eine gedrosselte Verbindung zwischen dem zweiten Druckmittelanschluß Br und dem dritten Druckmittelanschluß T hergestellt, so daß der Rückfluß des Druckmittels zum Druckmitteltank hin gewährleistet ist. In der in Fig. 8 gezeigten Grundstellung des Stellkolbens 7 ist der zweite Druckmittelanschluß Br jedoch sowohl vom ersten Druckmittelanschluß P als auch von dem dritten Druckmittelanschluß T und somit auch von dem Druckmitteltank getrennt. Der Stellkolben 7 kann in dieser Grundstellung durch die Stiltsetzeinrichtung 50, wie bereits anhand der Fig. 5 und 6 beschrieben, fixiert werden.

Ist an den zweiten Druckmittelanschluß Br eine Haltebremse angeschlossen, so hat dies den Vorteil, daß die Haltebremse bei Ausfall des Hydrauliksystems von den Druckmittelanschlüssen P und T isoliert werden kann und an der Haltebremse ein konstanter Druck aufrechterhalten wird. Mittels einer nicht dargestellten hydraulischen Handpumpe kann der hydraulische Druck an der Haltebremse bei Ausfall des Hydrauliksystems dann so weit erhöht werden, daß die Haltebremse gelöst wird und ein Abschleppen des Fahrzeuges, an welchem die Haltebremse montiert ist, ermöglicht wird.

Die Erfindung ist nicht auf die dargestellten Ausführungsbeispiele begrenzt. Das erfindungsgemäße Hydraulikventil 1 kann in vielfältiger Weise ausgebildet sein. Insbesondere kann die axiale Längsbohrung 21 durch außenseitig an den Führungsabschnitten 8 und 9 angeordnete Rillen ersetzt werden. Auch kann der Führungsabschnitt 9 ggfs. entfallen und die erste Ringnut 19 und die zweite Ringnut 20 können als axial durchgehend verlaufende gemeinsame Ringnut ausgebildet sein.

## Patentansprüche

1. Kombiniertes hydraulisches Druckminder- und Schaltventil (1) mit
einem in einem Ventilkörper (2) ausgebildeten ersten Druckmittelanschluß (P),
einem in dem Ventilkörper (2) ausgebildeten zweiten Druckmittelanschluß (Br) und
einem in dem Ventilkörper (2) bewegbaren Stellkolben (7), an welchem
eine Druckfläche (16), um den Stellkolben (7) bei Beaufschlagung mit einem an dem ersten Druckmittelanschluß (P) herrschenden Eingangsdruck (pₚ) aus einer Grundstellung gegen eine Rückstellkraft proportional zu dem Eingangsdruck (pₚ) zu verschieben,
eine erste Steuerkante (40), um den ersten Druckmittelanschluß (P) ab einer vorgegebenen Mindestverschiebung des Stellkolbens (7), die einem unteren Schwellwert (p₁) des Eingangsdrucks (pₚ) entspricht, mit dem zweiten Druckmittelanschluß (Br) zu verbinden, und
eine zweite Steuerkante (41), um die Verbindung des ersten Druckmittelanschlusses (P) mit dem zweiten Druckmittelanschluß (Br) ab einer vorgegebenen Maximalverschiebung des Stellkolbens (7), die einem oberen Schwellwert (p₂) des Eingangsdrucks (pₚ) entspricht, zu unterbrechen, ausgebildet sind.

2. Kombiniertes hydraulisches Druckminder- und Schaltventil nach Anspruch 1,
**dadurch gekennzeichnet,**
**daß** ein dritter Druckmittelanschluß (T) vorgesehen ist und zwischen dem zweiten Druckmittelanschluß (Br) und dem dritten Druckmittelanschluß (T) eine Drossel (25) ausgebildet ist.

3. Kombiniertes hydraulisches Druckminder- und Schaltventil nach Anspruch 2,
**dadurch gekennzeichnet,**
**daß** die Drossel (25) als Abflachung oder Kerbe oder Bohrung an dem Stellkolben (7) ausgebildet ist.

4. Kombiniertes hydraulisches Druckminder- und Schaltventil nach einem der Ansprüche 1 bis 3,
**dadurch gekennzeichnet, daß** die Druckfläche (16) an einer Stirnfläche des Stellkolbens (7) ausgebildet ist.

5. Kombiniertes hydraulisches Druckminder- und Schaltventil nach Anspruch 4,
**dadurch gekennzeichnet,**
**daß** die Rückstellkraft von einer sich an dem der Druckfläche (16) gegenüberliegenden Ende (13) des Stellkolbens (7) abstützenden Rückstellfeder (11) ausgeübt wird.

6. Kombiniertes hydraulisches Druckminder- und Schaltventil nach Anspruch 5,
**dadurch gekennzeichnet,**
**daß** die Rückstellfeder (11) sich an einem Federteller (65) abstützt, dessen Lage zur Justage der von der Rückstellfeder (11) ausgeübten Rückstellkraft verstellbar ist.

7. Kombiniertes hydraulisches Druckminder- und Schaltventil nach einem der Ansprüche 1 bis 6,
**dadurch gekennzeichnet,**
**daß** an dem Stellkolben (7) eine erste Ringnut (19) ausgebildet ist, die sich in der Grundstellung des Stellkolbens (7) im Bereich des ersten Druckmittelanschlusses (P) befindet und bei Erreichen der Maximalverschiebung des Stellkolbens (7) von dem ersten Druckmittelanschluß (P) getrennt ist.

8. Kombiniertes hydraulisches Druckminder- und Schaltventil nach Anspruch 7,
**dadurch gekennzeichnet,**
**daß** eine Seitenkante der ersten Ringnut (19) die zweite Steuerkante (41) bildet.

9. Kombiniertes hydraulisches Druckminder- und Schaltventil nach Anspruch 7 oder 8,
**dadurch gekennzeichnet,**
**daß** in dem Ventilkörper (7) eine an die Druckfläche (16) des Stellkolbens (7) angrenzende Druckkammer (15) ausgebildet ist, die mit der ersten Ringnut (19) verbunden ist.

10. Kombiniertes hydraulisches Druckminder- und Schaltventil nach einem der Ansprüche 1 bis 9,
**dadurch gekennzeichnet,**
**daß** an dem Stellkolben (7) eine zweite Ringnut (20) ausgebildet ist, die in der Grundstellung des Stellkolbens (7) von dem zweiten Druckmittelanschluß (Br) getrennt ist und bei Überschreiten der Minimalverschiebung des Stellkolbens (7) in den Bereich des zweiten Druckmittelanschlusses (Br) verschoben ist.

11. Kombiniertes hydraulisches Druckminder- und Schaltventil nach Anspruch 10,
**dadurch gekennzeichnet, daß** eine Seitenkante der zweiten Ringnut (20) die erste Steuerkante (40) bildet.

12. Kombiniertes hydraulisches Druckminder- und Schaltventil nach Anspruch 9 und 10 oder 11,
**dadurch gekennzeichnet,**
**daß** die erste Ringnut (19), die zweite Ringnut (20) und die Druckkammer (15) über eine oder mehrere in dem Stellkolben (7) vorgesehene Bohrungen (21, 22, 23) miteinander verbunden sind.

13. Kombiniertes hydraulisches Druckminder- und Schaltventil nach Anspruch 2 oder 3,
**dadurch gekennzeichnet,**
**daß** an dem Stellkolben (7) eine dritte Ringnut (24) ausgebildet ist, die mit der Drossel (25) in Verbindung steht.

14. Kombiniertes hydraulisches Druckminder- und Schaltventil nach einem der Ansprüche 1 bis 13,
**dadurch gekennzeichnet,**
**daß** an dem Ventilkörper (2) eine Stillsetzeinrichtung (50) vorgesehen ist, um den Stellkolben (7) lösbar stillzusetzen.

## Claims

1. Combined hydraulic pressure-reducing and switching valve (1) with a first pressure medium connection (P) constructed in a valve body (2), a second pressure medium connection (Br) constructed in the said valve body (2) and a regulating piston (7) which is movable in the said valve body (2) and on which there are constructed:
a pressure face (16), in order to displace the said regulating piston (7), when acted upon by an input pressure (pₚ) prevailing at the first pressure medium connection (P), out of a normal position against a restoring force in a manner proportional to the said input pressure (pₚ);
a first control edge (40), in order to connect the first pressure medium connection (P) to the second pressure medium connection (Br), starting from a predetermined minimum displacement of the regulating piston (7) that corresponds to a lower threshold value (p₁) of the input pressure (pₚ); and
a second control edge (41), in order to interrupt the connection of the first pressure medium connection (P) to the second pressure medium connection (Br), starting from a predetermined maximum displacement of the regulating piston (7) that corresponds to an upper threshold value (p₂) of the input pressure (pₚ).

2. Combined hydraulic pressure-reducing and switching valve according to claim 1,
**characterised in that**
a third pressure medium connection (T) is provided, and a throttle (25) is constructed between the second pressure medium connection (Br) and the third pressure medium connection (T).

3. Combined hydraulic pressure-reducing and switching valve according to claim 2,
**characterised in that**
the throttle (25) is constructed as a flattened portion or notch or bore on the regulating piston (7).

4. Combined hydraulic pressure-reducing and switching valve according to one of claims 1 to 3,
**characterised in that**
the pressure face (16) is constructed on one end face of the regulating piston (7).

5. Combined hydraulic pressure-reducing and switching valve according to claim 4,
**characterised in that**
the restoring force is exerted by a restoring spring (11) which is supported against the opposite end (13) of the regulating piston (7) from the pressure face (16).

6. Combined hydraulic pressure-reducing and switching valve according to claim 5,
**characterised in that**
the restoring spring (11) is supported against a spring plate (65) whose location is adjustable for the purpose of adjusting the restoring force exerted by the restoring spring (11).

7. Combined hydraulic pressure-reducing and switching valve according to one of claims 1 to 6,
**characterised in that**
a first annular groove (19), which is located in the region of the first pressure medium connection (P) when the regulating piston (7) is in the normal position, and which is separated from the said first pressure medium connection (P) when the maximum displacement of the regulating piston (7) is reached, is constructed on the said regulating piston (7).

8. Combined hydraulic pressure-reducing and switching valve according to claim 7,
**characterised in that**
a lateral edge of the first annular groove (19) forms the second control edge (41).

9. Combined hydraulic pressure-reducing and switching valve according to claim 7 or 8,
**characterised in that**
a pressure chamber (15), which adjoins the pressure face (16) of the regulating piston (7) and is connected to the first annular groove (19), is constructed in the valve body (2).

10. Combined hydraulic pressure-reducing and switching valve according to one of claims 1 to 9,
**characterised in that**
a second annular groove (20), which is separated from the second pressure medium connection (Br) when the regulating piston (7) is in the normal position, and which is displaced into the region of the said second pressure medium connection (Br) when the minimum displacement of the regulating piston (7) is exceeded, is constructed on the said regulating piston (7).

11. Combined hydraulic pressure-reducing and switching valve according to claim 10,
**characterised in that**
a lateral edge of the second annular groove (20) forms the first control edge (40).

12. Combined hydraulic pressure-reducing and switching valve according to claims 9 and 10 or 11,
**characterised in that**
the first annular groove (19), the second annular groove (20) and the pressure chamber (15) are connected to one another via one or more bores (21, 22, 23) provided in the regulating piston (7).

13. Combined hydraulic pressure-reducing and switching valve according to claim 2 or 3,
**characterised in that**
a third annular groove (24), which is in communication with the throttle (25), is constructed on the regulating piston (7).

14. Combined hydraulic pressure-reducing and switching valve according to one of claims 1 to 13,
**characterised in that**
an arresting apparatus (50) is provided on the valve body (2), in order to arrest the regulating piston (7) in a releasable manner.

## Revendications

1. Soupape hydraulique combinée (1) de réduction et de commande, comprenant
un premier raccord (P) à fluide pressurisé, ménagé dans un corps obturateur (2),
un deuxième raccord (Br) à fluide pressurisé, ménagé dans ledit corps obturateur (2), et
un piston régulateur (7) mobile dans ledit corps obturateur (2), et sur lequel sont façonnées
une surface de pression (16) destinée à faire coulisser le piston régulateur (7) à partir d'une position initiale, lors d'une sollicitation par une pression d'entrée (pₚ) régnant sur le premier raccord (P) à fluide pressurisé, en s'opposant à une force de rappel, proportionnellement à ladite pression d'entrée (pₚ),
une première arête de commande (40) destinée à relier le premier raccord (P) à fluide pressurisé au deuxième raccord (Br) à fluide pressurisé, à partir d'un coulissement minimal préétabli du piston régulateur (7), correspondant à une valeur inférieure de seuil (p₁) de la pression d'entrée (pₚ), et
une seconde arête de commande (41) destinée à rompre la liaison du premier raccord (P) à fluide pressurisé avec le deuxième raccord (Br) à fluide pressurisé, à partir d'un coulissement maximal préétabli du piston régulateur (7), correspondant à une valeur supérieure de seuil (p₂) de la pression d'entrée (pₚ).

2. Soupape hydraulique combinée de réduction et de commande selon la revendication 1,
**caractérisée par le fait**
**qu'**il est prévu un troisième raccord (T) à fluide pressurisé, et un étranglement (25) est ménagé entre le deuxième raccord (Br) à fluide pressurisé et ledit troisième raccord (T) à fluide pressurisé.

3. Soupape hydraulique combinée de réduction et de commande selon la revendication 2,
**caractérisée par le fait**
**que** l'étranglement (25) se présente comme un méplat, une encoche ou un perçage sur le piston régulateur (7).

4. Soupape hydraulique combinée de réduction et de commande selon l'une des revendications 1 à 3,
**caractérisée par le fait**
**que** la surface de pression (16) est façonnée sur une face extrême du piston régulateur (7).

5. Soupape hydraulique combinée de réduction et de commande selon la revendication 4,
**caractérisée par le fait**
**que** la force de rappel est exercée par un ressort de rappel (11) prenant appui contre l'extrémité (13) du piston régulateur (7) qui est tournée à l'opposé de la surface de pression (16).

6. Soupape hydraulique combinée de réduction et de commande selon la revendication 5,
**caractérisée par le fait**
**que** le ressort de rappel (11) prend appui contre une cuvette (65) de ressort, dont la position est réglable en vue d'ajuster la force de rappel développée par ledit ressort de rappel (11).

7. Soupape hydraulique combinée de réduction et de commande selon l'une des revendications 1 à 6,
**caractérisée par le fait**
**qu'**une première saignée annulaire (19), façonnée sur le piston régulateur (7), se trouve dans la région du premier raccord (P) à fluide pressurisé lorsque ledit piston régulateur (7) occupe la position initiale, et est séparée d'avec ledit premier raccord (P) à fluide pressurisé lorsque ledit piston régulateur (7) atteint le coulissement maximal.

8. Soupape hydraulique combinée de réduction et de commande selon la revendication 7,
**caractérisée par le fait**
**qu'**une arête latérale de la première saignée annulaire (19) matérialise la seconde arête de commande (41).

9. Soupape hydraulique combinée de réduction et de commande selon la revendication 7 ou 8,
**caractérisée par le fait**
**qu'**une chambre de pression (15), ménagée dans le corps obturateur (7) et attenante à la surface de pression (16) du piston régulateur (7), est reliée à la première saignée annulaire (19).

10. Soupape hydraulique combinée de réduction et de commande selon l'une des revendications 1 à 9,
**caractérisée par le fait**
**qu'**une deuxième saignée annulaire (20), façonnée sur le piston régulateur (7), est séparée d'avec le deuxième raccord (Br) à fluide pressurisé lorsque ledit piston régulateur (7) occupe la position initiale, et est décalée jusque dans la région dudit deuxième raccord (Br) à fluide pressurisé en cas de dépassement du coulissement minimal dudit piston régulateur (7).

11. Soupape hydraulique combinée de réduction et de commande selon la revendication 10,
**caractérisée par le fait**
**qu'**une arête latérale de la deuxième saignée annulaire (20) matérialise la première arête de commande (40).

12. Soupape hydraulique combinée de réduction et de commande selon les revendications 9 et 10 ou 11,
**caractérisée par le fait**
**que** la première saignée annulaire (19), la deuxième saignée annulaire (20) et la chambre de pression (15) sont reliées mutuellement par l'intermédiaire d'un ou plusieurs perçage(s) (21, 22, 23) prévu(s) dans le piston régulateur (7).

13. Soupape hydraulique combinée de réduction et de commande selon la revendication 2 ou 3,
**caractérisée par le fait**
**qu'**une troisième saignée annulaire (24), façonnée sur le piston régulateur (7), est en communication avec l'étranglement (25).

14. Soupape hydraulique combinée de réduction et de commande selon l'une des revendications 1 à 13,
**caractérisée par le fait**
**qu'**un dispositif (50) de mise à l'arrêt est prévu, sur le corps obturateur (2), pour provoquer une mise à l'arrêt libérable du piston régulateur (7).
